# EUROPEAN PATENT SPECIFICATION

(11) **EP 2 228 515 B1**
(45) Date of publication and mention of the grant of the patent: **25.07.2018**
(21) Application number: 10153653.0
(22) Date of filing: 16.02.2010
(51) Int. Cl.: F01D 5/18, F01D 25/32, F02C 3/10, F02C 3/30, F02C 7/12, F02C 9/18, F01K 21/04, F02C 7/16

(54) **Two-shaft gas turbine system and related method of operation**
Doppelwellen-Gasturbine und zugehöriges Betriebsverfahren
Turbine à gaz à deux arbres et procédé de fonctionnement associé

(30) Priority: 11.03.2009 JP 2009057278
(43) Date of publication of application: 15.09.2010
(73) Proprietor: Mitsubishi Hitachi Power Systems, Ltd., Yokohama 220-8401 (JP)
(72) Inventor: Takahashi, Yasuo, Tokyo 100-8220 (JP); Koganezawa, Tomomi, Tokyo 100-8220 (JP); Higuchi, Shinichi, Tokyo 100-8220 (JP)
(74) Representative: MERH-IP Matias Erny Reichl Hoffmann Patentanwälte PartG mbB

(56) References cited:
- EP-A2- 1 528 238
- EP-A2- 1 548 236
- EP-A2- 1 612 375
- JP-A- 11 257 006
- JP-A- 2006 112 282

## Description

### BACKGROUND OF THE INVENTION

### 1. Field of the Invention

The present invention relates generally to two-shaft gas turbine systems in which one shaft is used exclusively for each of a high-pressure turbine for driving a compressor and a low-pressure turbine for outputting shaft power. The invention relates particularly to two-shaft gas turbine systems that are applied to such gas turbine systems as an advanced humid-air gas turbine system, a steam-injected turbine system, a nitrogen-injected turbine system, and a turbine system for low-calorific-gas, in which the amount of working fluid supplied to a combustor is larger than in a simple-cycle gas turbine system.

### 2. Description of the Related Art

JP-5-18271-A discloses a two-shaft gas turbine system in which one shaft is used exclusively for each of a high-pressure turbine that drives a compressor and a low-pressure turbine that drives a generator or a pump.

A two-shaft gas turbine system is capable of high-speed rotation of a compressor and high-pressure turbine even when a driven apparatus such as a pump or a screw compressor is low in rotational speed. Thus, the torque of the low-pressure turbine of the system can be increased even when its rotational speed is low. For this reason, two-shaft gas turbine systems have been commonly employed to drive apparatuses such as pumps or screw compressors; however, it is also possible to employ them for electric power generation by driving generators with their low-pressure turbines. When such a two-shaft gas turbine system is employed without a speed reducer, high efficiency can be achieved by rotating its compressor at high speed. The use of a speed reducer also results in a cost decrease and an efficiency improvement because the speed reduction ratio can be decreased.

PCT WO2000/25009 also discloses an advanced humid-air gas turbine system in which its output and efficiency are enhanced by humidifying its working fluid (e.g., air) and collecting with this humidified working fluid the heat energy of exhaust discharged from its gas turbine.
EP 1612 375 A2 also discloses an advanced humid air turbine power plant capable of suppressing condensation of moisture in a cooling channel, which is provided to cool a high-temperature component of a gas turbine, in a start up stage, a coast down stage, and a load varying state of the gas turbine. A coolant is switched over from the compressed air to the humidified air in the start-up stage and the load increasing stage of the gas turbine, and from the humidified air to the compressed air in the load decreasing stage and the coast down stage, as well as in the event of an abnormality in a humidifying line. JP 11 257006 A discloses a gas turbine system and a method of operation thereof, the system comprising: a compressor for compressing air, a humidification tower for increasing the flow rate of working fluid that includes the compressed air, a combustor for combusting the working fluid increased in flow rate with fuel to generate combustion gas, a turbine connected to the compressor with a shaft and driven by the combustion gas, a recuperator, a first branched flow path operated to guide part of the working fluid increased in flow rate by the humidifier exiting the recuperator to the turbine parts that require cooling without introduction thereof into the combustor, a flow rate adjuster placed on the branched flow path and a control device controlling the flow rate adjuster.

### SUMMARY OF THE INVENTION

In an advanced humid-air gas turbine system, turbine output is increased by humidifying the compressed air bled from its compressor. When such a gas turbine system is applied to a two-shaft gas turbine system, however, the high-pressure turbine that drives the compressor increases in output, which may result in an over speed of the compressor if no measure is taken. The over speed of the compressor is undesirable because it causes oscillation of the blades and shafts of the compressor and the high-pressure turbine and may damage their rotary parts.

A possible method for preventing the over speed of the compressor is to reduce the amount of fuel supplied to the combustor and maintain the rotational speed of a compressor at a given value. However, this results in a decrease in turbine efficiency due to a decrease in turbine inlet temperature, and efficiency improvements expected of the advanced humid-air gas turbine system are not achieved.

Another method for preventing the over speed of the compressor is to discharge part of the high-pressure air inside the compressor into the atmosphere and thereby prevent an increase in the output of the high-pressure turbine that drives the compressor. However, the discharge of the high-pressure air that has been compressed with compression energy into the atmosphere leads to a decrease in gas turbine efficiency. In terms of efficiency improvement, it is therefore desired that the working fluid compressed by the compressor be introduced into the upstream side of the high-pressure turbine for its turbine expansion work.

Still another method for preventing the over speed of the compressor is to perform a setup in advance such that load distribution among the high-pressure turbine and the low-pressure turbine of the gas turbine system becomes optimal at the time of humidification. However, during startup or the like when the working fluid is not being humidified, the output from the high-pressure turbine becomes lower than the drive force for the compressor, resulting in an under speed of the compressor. As with over speed, the under speed of the compressor causes oscillation of the blades and shafts of the compressor and the high-pressure turbine and may damage their rotary parts. In the case of a fixed rotational speed gas turbine system, the under speed of the compressor may also cause an undesirable consequence: surging of the compressor, which results from an increase in pressure ratio, a decrease in the flow rate of the working fluid, and a decrease in compression efficiency due to an increase in the flow rate of fuel.

An object of the invention is thus to provide a highly-reliable two-shaft gas turbine system in which the rotational speed of a compressor exceeds its rated rotational speed when the combustion temperature during rated operation is set to the rated combustion temperature of a simple-cycle gas turbine system and in which the drive force for the compressor can be balanced with the output from a high-pressure turbine without turbine efficiency being compromised.

To achieve the above object, the invention provides a two-shaft gas turbine system and a method for operating such a system according to the appended claims. In accordance with the invention, it is possible to provide a highly-reliable two-shaft gas turbine system in which the rotational speed of a compressor exceeds its rated rotational speed when the combustion temperature during rated operation is set to the rated combustion temperature of a simple-cycle gas turbine system and in which the drive force for the compressor can be balanced with the output from a high-pressure turbine without turbine efficiency being compromised.

### BRIEF DESCRIPTION OF THE DRAWINGS

FIG. 1 is a diagram illustrating the configuration of an advanced humid-air gas turbine system according to Embodiment 1 of the invention;
FIG. 2 is a diagram illustrating the configuration of an advanced humid-air gas turbine system according to Embodiment 2 of the invention;
FIG. 3 is a diagram illustrating the configuration of an advanced humid-air gas turbine system according to Embodiment 3 of the invention;
FIG. 4 is a diagram illustrating the configuration of an advanced humid-air gas turbine system according to Embodiment 4 of the invention;
FIG. 5 is a diagram illustrating as a comparative example the configuration of a two-shaft humid-air gas turbine system;
FIG. 6 is a diagram illustrating a two-shaft gas turbine system according to an exemplary embodiment;
FIG. 7 is a diagram illustrating a two-shaft gas turbine system according to an exemplary embodiment; and
FIG. 8 is a diagram illustrating a two-shaft gas turbine system according to an exemplary embodiment.

### DESCRIPTION OF THE PREFERRED EMBODIMENTS

The invention relates particularly to a two-shaft gas turbine system in which the rotational speed of a compressor exceeds its rated rotational speed when the combustion temperature during rated operation is set to the rated combustion temperature of a simple-cycle gas turbine system. Examples of such a gas turbine system include an advanced humid-air gas turbine system in which humidification of air, or working fluid, increases the flow rate of the working fluid; a gas turbine system in which surplus steam or nitrogen is injected into a combustor and a working fluid; and a gas turbine system in which gas lower in calorific value than commonly-used natural gases is burned as fuel, each of which will be described later in detail in the embodiments that follow.

### Embodiment 1

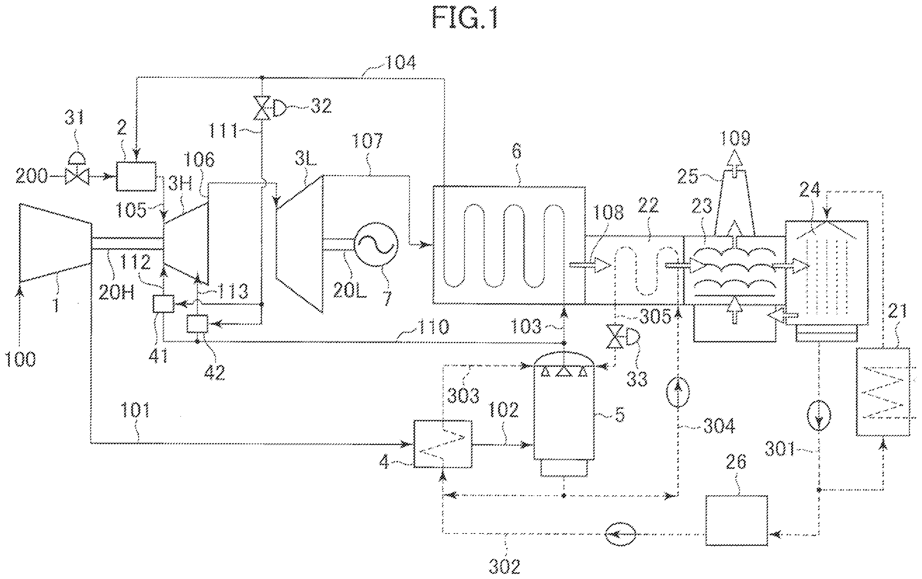

Described with reference to FIG. 1 is an advanced humid-air gas turbine system according to Embodiment 1 to which a two-shaft gas turbine system is applied. FIG. 1 is a diagram illustrating the overall configuration of the advanced two-shaft humid-air gas turbine system of Embodiment 1.

The two-shaft humid-air gas turbine system, intended for electric power generation, includes a compressor 1, a combustor 2, a high-pressure turbine 3H, a low-pressure turbine 3L, a humidification tower 5, and a recuperator 6 and uses the output from the low-pressure turbine 3L to drive a generator 7 for power generation. The compressor 1 and the high-pressure turbine 3H are connected to each other by a shaft 20H and rotate at the same rotational speed. Likewise, the low-pressure turbine 3L and the generator 7 are connected to each other by a shaft 20L and rotate at the same rotational speed. The low-pressure turbine 3L and the generator 7 can instead be connected to each other via a speed reducer not illustrated. In that case, the rotational speed of the generator 7 is smaller than that of the low-pressure turbine 3L by a speed reduction ratio of the speed reducer. The shaft 20H connected to the high-pressure turbine 3H and the shaft 20L connected to the low-pressure turbine 3L are not connected to each other. Thus, any rotational speed can be set for the compressor 1 and the low-pressure turbine 3L. The advanced humid-air gas turbine system is operable even if the compressor 1 and the low-pressure turbine 3L differ in rotational speed.

In the above two-shaft gas turbine system, the compressor 1 and the high-pressure turbine 3H can be rotated at high speed even if a driven machine (e.g., generator) is low in rotational speed. Thus, the torque of the low-pressure turbine 3L can be increased even when its rotational speed is low. Therefore, the above two-shaft gas turbine system can be applied widely, not only to power generation but to the drive of a pump or a screw compressor.

Discussed next is the flow of the working fluid used in the advanced humid-air gas turbine system of Embodiment 1. Atmospheric air 100 is first introduced into the compressor 1 for compression. All of the high-pressure air 101 generated by the compressor 1 is then bled from its gas path outlet. Next, the high-pressure air 101 is cooled by an air cooler 4. The cooled high-pressure air 102 is thereafter fed to the humidification tower 5, where the air 102 is humidified by water 303 heated at the air cooler 4 and by water 305 heated at an economizer 22. The better part of the humidified air 103 obtained at the humidification tower 5 is then fed to the recuperator 6. Part of the humidified air 103 is fed to coolant mixers 41 and 42 located on a coolant path 110 through which coolant, or part of the humidified air 103, passes to cool the high-temperature parts of the high-pressure turbine 3H.

The humidified air 103 fed to the recuperator 6 is superheated by heat exchange with exhaust 107 from the low-pressure turbine 3L, turning the humidified air 103 into high-temperature humid air 104. The better part of the high-temperature humid air 104 is then fed to the combustor 2.

In the meantime, the coolant mixers 41 and 42 mix part of the humidified air 103 obtained at the humidification tower 5 with part of the high-temperature humid air 104 obtained at the recuperator 6, thereby generating an optimal coolant for cooling the high-temperature parts of the high-pressure turbine 3H. The high-temperature humid air 104 fed to the combustor 2 is mixed with fuel and combusted. The combustion gas 105 obtained at the combustor 2 is supplied to the high-pressure turbine 3H to drive the high-pressure turbine 3H. Inside the gas path of the high-pressure turbine 3H, the combustion gas 105 merges with the coolant air that has passed through flow paths 112 and 113 to cool the high-temperature parts of the high-pressure turbine 3H. The combustion gas 105 and the coolant air are then discharged from the high-pressure turbine 3H as exhaust 106.

The exhaust 106 from the high-pressure turbine 3H is fed to the low-pressure turbine 3L, re-expanded there, and discharged therefrom as exhaust 107. The exhaust 107 is fed to the recuperator 6 for heat recovery; thereafter, it passes through the economizer 22, an exhaust gas economizer 23, and a water recovery apparatus 24 and is discharged from an exhaust tower 25 as exhaust 109.

In terms of exhaust gas, the efficiency of the advanced humid-air gas turbine system is high since heat energy is recuperated by the recuperator 6 and the economizer 22. As a result, the exhaust 109 released from the exhaust tower 25 is low in temperature due to the loss of heat energy.

The drive force obtained at the high-pressure turbine 3H is transmitted to the compressor 1 via the shaft 20H, thereby driving the compressor 1 to compress the air 100. The drive force obtained at the low-pressure turbine 3L is transmitted via the shaft 20L to the generator 7, where it is converted into electric energy. The machine driven by the low-pressure turbine 3L can be a pump or a screw compressor, instead of the generator 7.

Next, the water circulation system is discussed. The water recovery apparatus 24 uses coolant water from a cooler 21 to cool the exhaust discharged from the exhaust gas economizer 23 and condenses the moisture in the exhaust, thereby collecting water. Water 301 discharged from the water recovery apparatus 24 is fed to the cooler 21 and to a water treatment apparatus 26. Water 302 that underwent some treatments at the water treatment apparatus 26 is fed to the air cooler 4 that cools the high-pressure air 101 bled from the compressor 1. The water 302 fed to the air cooler 4 is heated there, and the heated water 303 is then fed to the humidification tower 5. The humidification tower 5 uses the heated water 303 to humidify the cooled high-pressure air 102 fed from the air cooler 4. The used water is fed back to the air cooler 4 and also to the economizer 22. The economizer 22 heats the circulating water 304 discharged from the humidification tower 5 using as a heat source exhaust 108 from which heat has been recuperated by the recuperator 6, thereby generating the heated water 305. The heated water 305 is supplied to the humidification tower 5. In this manner, the humidification tower 5 receives heated water not only from the air cooler 4 but from the economizer 22.

### Comparative Example

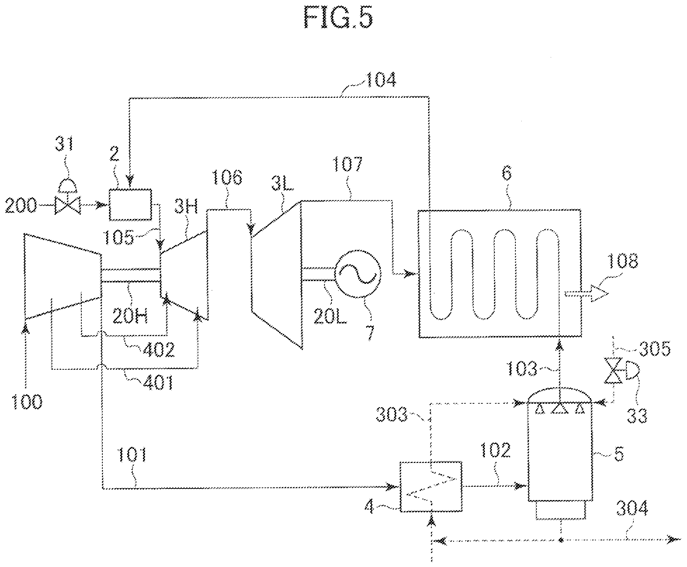

With reference to FIG. 5, another two-shaft humid-air gas turbine system will now be discussed as a comparative example of Embodiment 1. FIG. 5 is a diagram illustrating the configuration of a simple-cycle two-shaft gas turbine system to which an advanced humid-air gas turbine system is applied.

In FIG. 5, the exhaust system located downstream of the recuperator 6 is not illustrated since it is the same as in FIG. 1. First assume that the amount of water supplied to the humidification tower 5 is zero, which corresponds to a regenerative cycle. The flow rate balance of the working fluid between the compressor 1 and the high-pressure turbine 3H is equivalent to that of a typical simple-cycle two-shaft gas turbine system, and so is the power balance between them. The gas turbine system of Comparative Example is designed such that the power of the compressor 1 and the power of the high-pressure turbine 3H are balanced at its rated rotational speed and rated combustion temperature. Coolant air 401 and coolant air 402 used to cool the high-temperature parts of the high-pressure turbine 3H are bled from the intermediate stage of the compressor 1 and supplied through piping to the high-pressure turbine 3H. The bleeding stage of the compressor 1 is designed such that during this air bleeding, high-pressure air can be secured in the bleeding stage so as to overcome the pressure difference between the compressor 1 and the high-pressure turbine 3H.

When the amount of water supplied to the humidification tower 5 is increased from zero to a predetermined value of an advanced humid-air gas turbine system, the flow rate of the working fluid increases due to humidification at the humidification tower 5. All the working fluid is then fed to the combustor 2 and combusted there, thus turning the working fluid into the combustion gas 105 used to drive the high-pressure turbine 3H. In this case, the output from the high-pressure turbine 3H is larger than in a simple-cycle gas turbine system, resulting in an over speed of the compressor 1. The over speed of the compressor 1 is undesirable because it causes oscillation of the blades and shafts of the compressor 1 and the high-pressure turbine 3H and may damage their rotary parts.

A possible method for preventing the over speed of the compressor 1 due to humidification is to reduce the amount of fuel 200 supplied to the combustor 2. However, the reduction of the amount of the fuel 200 means that the power balance between the compressor 1 and the high-pressure turbine 3H needs to be achieved at a lower combustion temperature than the rated combustion temperature, which reduces gas turbine efficiency. In that case, combining an advanced humid-air gas turbine system with a two-shaft gas turbine system does not lead to desired efficiency improvements.

Another method for preventing the over speed of the compressor 1 is to discharge part of the high-pressure air inside the compressor 1 into the atmosphere and thereby prevent an increase in the output of the high-pressure turbine 3H that drives the compressor 1. However, the discharge of the high-pressure air that has been compressed with compression energy into the atmosphere leads to a decrease in gas turbine efficiency. This also reduces the flow rate of high-pressure air supplied to the humidification tower 5 and the flow rate of humidified air supplied to the recuperator 6. As a result, the amount of heat exchange at the recuperator 6 with the exhaust 107 discharged from the low-pressure turbine 3L also decreases, and efficiency improvements expected of an advanced humid-air gas turbine system cannot be achieved. In terms of efficiency improvement, it is therefore desired that the working fluid whose heat has been collected at the recuperator 6 be introduced back into the upstream side of the high-pressure turbine 3H for turbine expansion work.

Still another method for preventing the over speed of the compressor 1 is to perform a setup in advance such that load distribution among the high-pressure turbine 3H and the low-pressure turbine 3L becomes optimal at the time of humidification. However, during startup or the like when the working fluid is not being humidified, the output from the high-pressure turbine 3H becomes lower than the drive force for the compressor 1, resulting in an under speed of the compressor 1. As with over speed, the under speed of the compressor 1 causes oscillation of the blades and shafts of the compressor 1 and the high-pressure turbine 3H and may damage their rotary parts. In the case of a fixed rotational speed gas turbine system, the under speed of the compressor 1 may also cause an undesirable consequence: surging of the compressor 1, which results from an increase in pressure ratio, a decrease in the flow rate of the working fluid, and a decrease in compression efficiency due to an increase in the flow rate of fuel. Surging refers to a phenomenon of unstable compressor operation resulting from wide pressure fluctuations and loud compressor oscillations that occur at a given pressure ratio.

Further, turbine inlet temperature differs between a two-shaft gas turbine system to which an advanced humid-air gas turbine system is applied and a simple-cycle two-shaft gas turbine system. Thus, the turbine blades (i.e., high-temperature parts) of the former system need to be those of an advanced humid-air gas turbine system and cannot be those of a simple-cycle gas turbine system.

With reference back to FIG. 1, some distinctive features of the gas turbine system of Embodiment 1 will be discussed. Consideration is given to the case where part of the humidified air 103 supplied from the humidification tower 5 toward the recuperator 6 is guided to the branched flow path 110 as coolant air to cool the high-temperature parts of the high-pressure turbine 3H.

Because the coolant air is part of the humidified air 103 fed from the humidification tower 5, not the air bled from the intermediate stage of the compressor 1, all the atmospheric air introduced into the compressor 1 is compressed, thus increasing the drive force required for the compressor 1. In order to balance this drive force with the output from the high-pressure turbine 3H, part of the high-temperature humid air 104 fed from the recuperator 6 toward the compressor 2 is diverged by a branched flow path 111, and a flow rate adjuster 32 placed on the branched flow path 111 is controlled. In other words, used as another coolant is part of the high-temperature humid air 104 that has passed through the flow rate adjuster 32. The coolant air is then guided through the branched flow path 111 into the coolant mixers 41 and 42 placed on the coolant paths adapted to cool the high-temperature parts of the high-pressure turbine 3H.

As above, the gas turbine system of Embodiment 1 is designed to diverge part of the high-temperature humid air 104, or the working fluid to drive the high-pressure turbine 3H, without introducing it into gas paths and use it as a coolant to cool high-temperature parts such as the blades of the high-pressure turbine 3H or the like when the rotational speed of the compressor 1 exceeds its rated rotational speed on the condition that the combustion temperature during rated operation is set to the rated combustion temperature of a simple-cycle gas turbine system. More specifically, the gas turbine system of Embodiment 1 includes the humidification tower 5, or mass increasing means, which is used to increase the mass flow of the working fluid containing the air compressed by the compressor 1 and diverges the high-temperature humid air 104 increased in flow rate by the humidification tower 5 into the branched flow path 111 located downstream of the compressor 2.

Such a configuration allows balancing the drive force for the compressor 1 with the output from the high-pressure turbine 3H and keeping the combustion temperature at the rated combustion temperature. Thus, the efficiency of the gas turbine system can be enhanced. As stated above, in addition to the high-temperature humid-air 104, the humidified air 103 that flows from the humidification tower 5 through the flow path 110 toward the high-pressure turbine 3H is also used to cool the high-temperature parts of the high-pressure turbine 3H. Because the coolant fed to the high-pressure turbine 3H is mixed with the combustion gas 105 inside its gas path, the compression energy retained by the mix even after cooling is eventually used by the low-pressure turbine 3L for its expansion work. Therefore, the compression energy that has been used by the compressor 1 to compress the atmospheric air 100 can be more efficiently used than when part of the air inside the compressor 1 is discharged into the atmosphere to balance the drive force for the compressor 1 with the output from the high-pressure turbine 3H.

The above configuration of Embodiment 1, which is a two-shaft gas turbine system to which an advanced humid-air gas turbine system is applied, is thus capable of a stable system operation by balancing the drive force for the compressor 1 with the output from the high-pressure turbine 3H while preventing over speed or under speed of the compressor 1. This in turn reduces the oscillation of rotary parts such as blades and shafts and extends their mechanical lives.

The configuration of Embodiment 1 also allows keeping the turbine inlet temperature at that of a simple-cycle gas turbine system. Thus, turbine efficiency improvements possible with an advanced humid-air gas turbine system can also be achieved with a two-shaft gas turbine system.

Moreover, since high-temperature humid air is used as the coolant to cool the high-temperature parts of the high-pressure turbine 3H, this allows lowering the upper temperature limits of turbine blade surfaces, whereby the reliability of the turbine blades can be enhanced. Thus, high-grade materials high in upper temperature limit need not be used as the materials of the high-pressure turbine 3H, which leads to a decrease in manufacturing costs. The reason is that humid air is higher in heat transfer rate and more effective in cooling than the atmospheric air.

Further, the gas turbine system of Embodiment 1 is also designed to allow the coolant mixers 41 and 42 to mix part of the humid air 103 fed from the humidification tower 5 with part of the high-temperature humid air 104 fed from the recuperator 6 toward the combustor 2 without supplying them directly to the high-pressure turbine 3H for cooling the turbine blades. In other words, the gas turbine system of Embodiment 1 uses the coolant mixers 41 and 42 to mix the coolant that flows through the first branched flow path 111 with the coolant that flows through the second branched flow path 110 before introducing them into the high-pressure turbine 3H. This prevents coolant condensation during cooling of the turbine blades. When the saturated vapor amount of coolant drops below the actual vapor amount of the coolant, the vapor that exceeds the saturated vapor amount cannot exist in the form of gas and turns itself into liquid or dew. If the thus-formed dew flows through the internal flow path of the high-pressure turbine 3H at high speed, the internal flow path is subject to local collision impacts due to the high-speed dew flow. Further, if the dew evaporates inside the internal flow path, the flow path is locally cooled rapidly due to the latent heat of evaporation, causing thermal stress, which leads to a decrease in the reliability of the turbine blades. Therefore, the gas turbine system of Embodiment 1 has the coolant mixers 41 and 42 placed on the coolant flow paths adapted to cool some stages of the high-pressure turbine 3H and supplies part of the high-temperature humid air 104 fed from the recuperator 6 to the coolant mixers 41 and 42. With this, an optimal coolant can be generated for a particular stage of the high-pressure turbine 3H, and the reliability of the gas turbine system can be enhanced by preventing coolant condensation.

Furthermore, the high-pressure turbine 3H and the low-pressure turbine 3L of the two-shaft humid-air gas turbine system of Embodiment 1 can be those used in a simple-cycle gas turbine system. Thus, costs associated with R&D, production, and quality control of turbine blades, i.e., high-temperature parts, can be reduced. Further, because the gas turbine system of Embodiment 1 allows the use of turbine blades used in a simple-cycle gas turbine system, which often require much cost and time for R&D, it becomes feasible to provide a wide product lineup including various turbine systems different in output and efficiency such as advanced humid-air gas turbine systems and steam-injected gas turbine systems. It is also possible to evaluate the mechanical lives of the turbine blades or the like in a unified manner, which results in highly reliable products. While Embodiment 1 is designed to feed coolant air to the high-temperature parts of the high-pressure turbine 3H, the coolant air can also be fed to other components as long as they require cooling. In that case, too, the reliability of the system can be enhanced by balancing the drive force for the compressor 1 with the output from the high-pressure turbine 3H.

### Embodiment 2

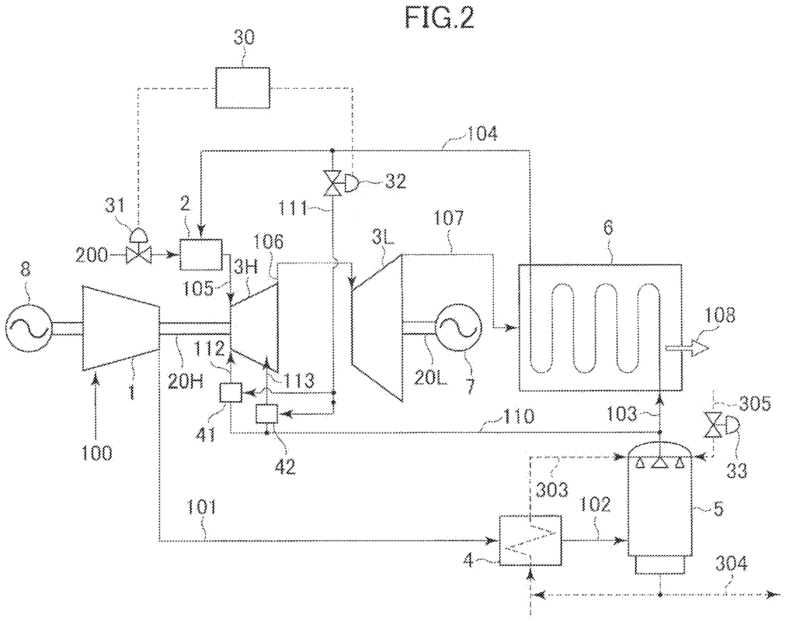

With reference now to FIG. 2, Embodiment 2 of the invention will be described. FIG. 2 is a diagram illustrating the configuration of a two-shaft humid-air gas turbine system according to Embodiment 2 of the invention. In FIG. 2, the exhaust system located downstream of the recuperator 6 is not illustrated since it is the same as in FIG. 1.

FIG. 2 differs from FIG. 1 in that, in FIG. 2, a generator 8, or a driven machine, is connected to the compressor-side end of the shaft 20H that connects the compressor 1 and the high-pressure turbine 3H. Major contributors to improvement in the efficiency of a gas turbine system include increasing the combustion temperature and reducing the amount of the coolant air that cools the high-temperature parts of its turbines. In the gas turbine system of Embodiment 1, the coolant air used to cool the high-temperature parts of the high-pressure turbine 3H is the coolant that is generated at the coolant mixers 41 and 42 by mixing part of the humidified air 103 fed from the humidification tower 5 toward the recuperator 6 with part of the high-temperature humid air 104 fed from the recuperator 6 toward the combustor 2. Since the thus-generated humid coolant is used to cool the high-temperature parts of the high-pressure turbine 3H, cooling efficiency is higher than the common case where compressed air is used for the cooling, resulting in a decrease in the amount of coolant air used. This also leads to an increase in the efficiency of the gas turbine system and an increase in its output.

When, on the other hand, the coolant air amount is increased to balance the drive force for the compressor 1 with the output from the high-pressure turbine 3H, the temperatures of the high-temperature metal parts of the high-pressure turbine 3H become lower than those during simple-cycle operation by a sufficient margin from the permissible metal temperatures. In that case, the efficiency of the gas turbine system can be improved by increasing the combustion temperature to increase the temperatures of the high-temperature metal parts almost up to those during simple-cycle operation. This increase in the combustion temperature leads to an improvement in the efficiency of the gas turbine system and an increase in the output of the high-pressure turbine 3H. In this manner, the output of the high-pressure turbine 3H increases in response to a decrease in the amount of coolant air and an increase in the combustion temperature.

In the gas turbine system of Embodiment 2, a driven machine such as the generator 8 or the like is installed on the compressor side so that the output from the high-pressure turbine 3H can be balanced with the drive force for the compressor 1 in response to an increase in the output from the high-pressure turbine 3H. Thus, part of the output from the high-pressure turbine 3H can be consumed by the generator 8. This ensures a high efficiency and reliability of the humid-air gas turbine system while preventing over speed of the compressor 1.

However, the installation of a driven machine such as the generator 8 or the like on the compressor side may result in structural complexity and cost increases. Thus, a more desirable method than the installation of the generator 8 is to control the flow rate adjuster 32 located on the branched flow path 111 through which part of the high-temperature humid air 104 passes from the recuperator 6 and thereby balance the drive force for the compressor 1 and the output from the high-pressure turbine 3H. The control of the flow rate adjuster 32 can be performed by a control device (not illustrated) based on the amount of fuel supplied to the combustor 2.

While the generator 8 is used as a driven apparatus in Embodiment 2, any apparatus can be used as such as long as it can consume the output from the high-pressure turbine 3H. In that case, too, the same effects result.

### Embodiment 3

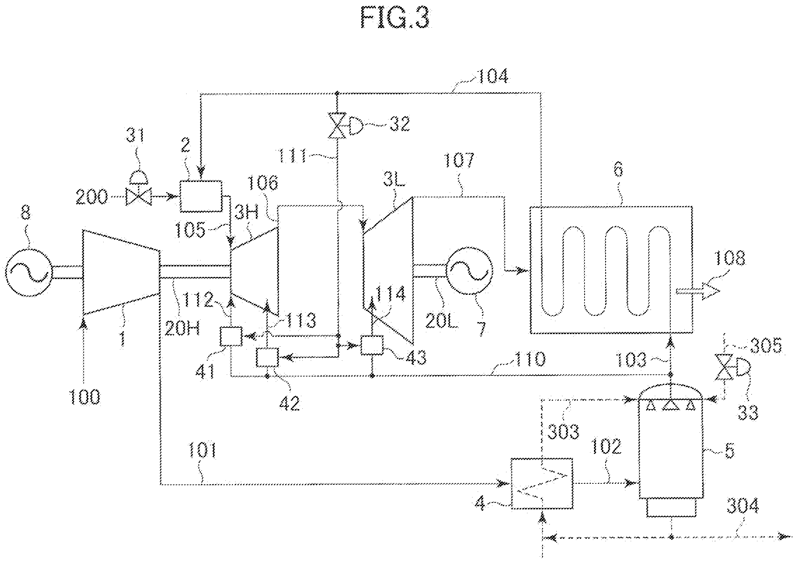

With reference now to FIG. 3, Embodiment 3 of the invention will be described. FIG. 3 is a diagram illustrating the configuration of a two-shaft humid-air gas turbine system according to Embodiment 3 of the invention. In FIG. 3, the exhaust system located downstream of the recuperator 6 is not illustrated since it is the same as in FIG. 2.

FIG. 3 differs from FIG. 2 in that, in FIG. 3, coolant air is supplied to the high-temperature parts of the low-pressure turbine 3L as well as to the high-temperature parts of the high-pressure turbine 3H.

When the combustion temperature is raised to improve the efficiency of the gas turbine system, the temperature of the exhaust 106 from the high-pressure turbine 3H also increases, and so do the temperature of the nozzle located at the furthest upstream section of the low-pressure turbine 3L and the wheel space temperature of the low-pressure turbine 3L. This necessitates supply of coolant air thereto.

Thus, Embodiment 3 is designed to supply the high-temperature parts of the low-pressure turbine 3L with part of the humidified air 103 fed from the humidification tower 5 toward the recuperator 6 to cool them, as well as cooling the high-temperature parts of the high-pressure turbine 3H. Therefore, a coolant mixer 43 is placed on the coolant path 110 to supply the coolant air to the high-temperature parts of the low-pressure turbine 3L, and the branched flow path 111 is designed to introduce part of the high-temperature humid air 104 fed from the recuperator 6 toward the combustor 2 into the coolant mixer 43.

Since Embodiment 3 is designed to supply the high-temperature parts of the low-pressure turbine 3L with part of the high-temperature humid air 104 fed from the recuperator 6 toward the combustor 2, the increase in the output of the high-pressure turbine 3H can be prevented when the combustion temperature is raised. Thus, the drive force for the compressor 1 can be balanced with the output from the high-pressure turbine 3H. The balance between them can be adjusted by controlling the flow rate adjuster 32 placed on the branched flow path 111 through which part of the high-temperature humid air 104 passes from the recuperator 6. Further, the difference between the coolant air supply pressure and the turbine working pressure during cooling of the low-pressure turbine 3L is larger than that during cooling of the high-pressure turbine 3H. Thus, if the humidified air 103 from the humidification tower 5 is supplied to the high-temperature parts of the low-pressure turbine 3L without any processing, the humidified air 103 is highly likely to condense inside the blade coolant path of the low-pressure turbine 3L. For this reason, part of the high-temperature humid air 104 supplied from the recuperator 6 toward the combustor 2 is fed to the coolant mixer 43, which is used to cool the high-temperature parts of the low-pressure turbine 3L, thereby lowering the relative humidity of the humidified air 103 inside the coolant mixer 43 and generating optimal coolant air. In this manner, the drive force for the compressor 1 can be balanced with the output from the high-pressure turbine 3H while the reliability of the high-temperature parts of the low-pressure turbine 3L is ensured. As in the gas turbine system of FIG. 2, the gas turbine system of FIG. 3 has the generator 8 installed for the compressor 1 so as to consume the output from the high-pressure turbine 3H. This also contributes to balancing the drive force for the compressor 1 with the output from the high-pressure turbine 3H, thereby stabilizing the operation of the two-shaft gas turbine system.

The gas turbine system of Embodiment 3 illustrated in FIG. 3 further allows reduction of costs associated with R&D, production, and quality control of turbine blades, i.e., high-temperature parts. The reason is that the same high-pressure turbine 3H can be used for a simple-cycle gas turbine system and for an advanced humid-air gas turbine system. However, when a low-pressure turbine that need not be cooled in a simple-cycle gas turbine system is to be used in an advanced humid-air gas turbine system where the combustion temperature is raised to improve its output and efficiency, the low-pressure turbine need be structurally modified so as to be cooled.

### Embodiment 4

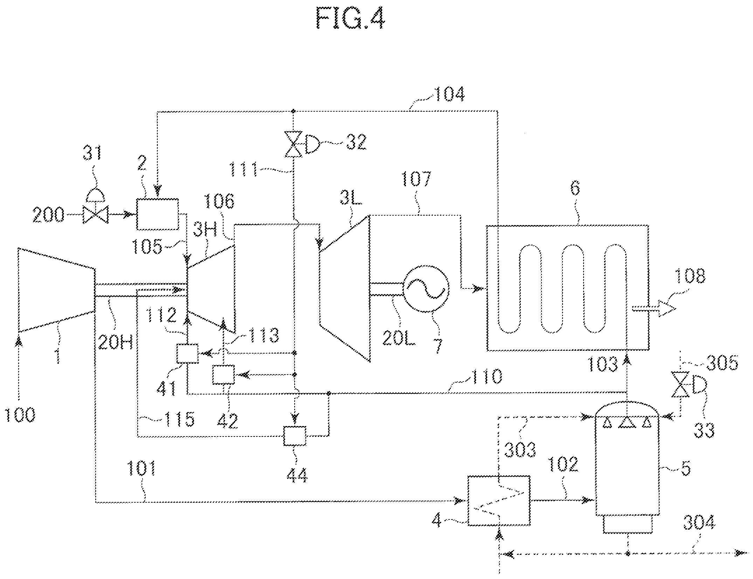

With reference now to FIG. 4, Embodiment 4 of the invention will be described. FIG. 4 is a diagram illustrating the configuration of a two-shaft humid-air gas turbine system according to Embodiment 4 of the invention. In FIG. 4, the exhaust system located downstream of the recuperator 6 is not illustrated since it is the same as in FIG. 1.

FIG. 4 differs from FIG. 1 in that, in FIG. 4, coolant air is supplied to the rotary side of the high-pressure turbine 3H as well as to its stationary side (i.e., high-temperature parts). Part of the humidified air 103 fed from the humidification tower 5 toward the recuperator 6, or a coolant to cool the high-pressure turbine 3H, is diverged into flow paths 112 and 113 that guide the coolant to the stationary side and into a flow path 115 that guides the coolant to the rotary side. The coolant mixers 41 and 42 that supply the coolant to the stationary side of the high-pressure turbine 3H are placed on the flow paths 112 and 113, respectively. A coolant mixer 44 that supplies the coolant to the rotary side of the high-pressure turbine 3H is placed on the flow path 115. The gas turbine system of Embodiment 4 also includes the branched flow path 111 that guides part of the high-temperature humid air 104 fed from the recuperator 6 toward the combustor 2 into each of the coolant mixers 41, 42, and 44.

By guiding part of the high-temperature humid air 104 fed from the recuperator 6 toward the combustor 2 into the branched flow path 111 and by controlling the flow rate adjuster 32 located on the branched flow path 111, the amount of the air supply to the coolant mixer 44 can be controlled. This allows reduction of the amount of the high-temperature humid air 104 supplied to the combustor 2, thereby adjusting the balance between the drive force for the compressor 1 and the output from the high-pressure turbine 3H. Thus, an advanced humid-air gas turbine system can be operated in a stable manner even if applied to a two-shaft gas turbine system. As stated above, part of the high-temperature humid air 104 supplied from the recuperator 6 toward the combustor 2 is fed through the branched flow path 111 to the coolant mixer 44 which is used to cool the rotary side of the high-pressure turbine 3H. This makes it possible to differentiate the condition of the coolant of the stationary side of the high-pressure turbine 3H from that of the rotary side of the high-pressure turbine 3H, whereby the reliability of the high-temperature parts of the high-pressure turbine 3H can be ensured.

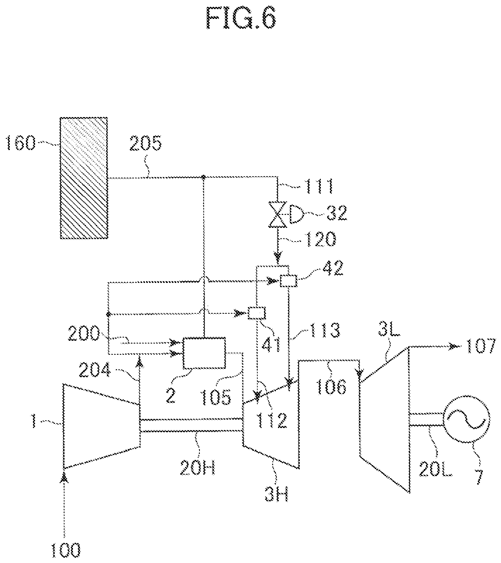

Furthermore, the use of humidified air as the coolant air for cooling the rotary side of the high-pressure turbine 3H leads to an increase in the heat transfer rate of the coolant air, thus improving cooling efficiency and reducing the amount of the coolant air. This in turn improves the efficiency of the gas turbine system. In the following embodiments 5 to 7, which do not form part of the invention, gas turbine systems other than advanced humid-air gas turbine systems are described. With reference now to FIG. 6, Embodiment 5 will be described.

In the humid-air gas turbine system of Embodiment 1 illustrated in FIG. 1, the working fluid used to cool the high-temperature parts of the high-pressure turbine 3H is the high-temperature humid air 104 that flows through the branched flow path 111. In a gas turbine system that has a steam source located nearby, in contrast, steam may be used in place of the high-temperature humid air 104.

Thus, a two-shaft gas turbine system according to Embodiment 5 is designed to employ as steam injecting means a boiler 160 installed separately from the gas turbine system.

FIG. 6 is a diagram illustrating the configuration of the gas turbine system of Embodiment 5 in which steam generated by the boiler 160 is used to cool the high-temperature parts of the high-pressure turbine 3H. The same reference numerals as used in other embodiments denote identical parts.

As illustrated in FIG. 6, compressed air 204 obtained at the compressor 1 is fed to the combustor 2. High-temperature combustion gas generated at the combustor 2 is fed sequentially to the high-pressure turbine 3H and the low-pressure turbine 3L to drive them.

Part of steam 205 generated at the boiler 160 is fed to the combustor 2, and the remainder is fed through the branched flow path 111 to the coolant mixers 41 and 42 placed on the coolant paths that guide the coolant to cool the high-temperature parts of the high-pressure turbine 3H. Other working fluids that can be supplied to the coolant mixers 41 and 42 include, for example, discharged air or bleed air from the compressor 1 and steam from another steam source other than the boiler 160. The coolant mixers 41 and 42 mix the steam fed from the boiler 160 with various working fluids to generate a coolant suitable for the cooling of the high-temperature parts of the high-pressure turbine 3H.

The steam 205 supplied from the boiler 160 to the combustor 2 corresponds partly to the high-temperature humid air 104 of Embodiment 1 illustrated in FIG. 1. The steam 205 can also be regarded as the moisture obtained by humidification at the humidification tower 5 in Embodiment 1.

The steam 205 of Embodiment 5 used to cool the high-temperature parts of the high-pressure turbine 3H is higher in heat transfer coefficient than air and thus more effective in cooling. Accordingly, when the steam 205 is used as the humidified air 103 of Embodiment 1 that flows through the flow path 110, low-grade materials low in upper temperature limit can instead be used as the materials of the high-pressure turbine 3H, which leads to a decrease in the manufacturing costs of the two-shaft gas turbine system of Embodiment 1.

The gas turbine system of Embodiment 5 is a two-shaft gas turbine system to which a gas turbine system that injects steam into its combustor is applied and designed to supply part of the injected steam to the high-temperature parts of the high-pressure turbine 3H. Such a configuration allows an improvement in gas turbine efficiency and results in a highly reliable two-shaft gas turbine system that is capable of operating its turbines in a stable manner by balancing the drive force for the compressor 1 with the output from the high-pressure turbine 3H.

FIG. 6 illustrates an example in which the steam 205 generated at the boiler 160 installed separately from the gas turbine system is fed to the combustor 2 and gas flow paths. Note however that this steam source can instead be an exhaust heat recovery boiler that makes efficient use of the exhaust heat energy from gas turbines. At various steam-employed plants, injection of surplus steam into a gas turbine system allows efficient use of heat energy. When the two-shaft gas turbine system of Embodiment 5 is applied to such a gas turbine system, the drive force for its compressor can be balanced with the output from its high-pressure turbine, thus allowing a stable system operation.

### Embodiment 6

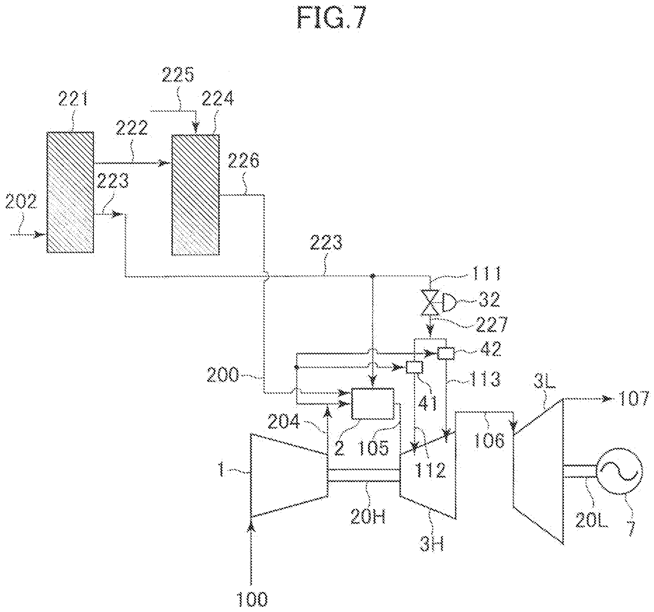

Described next with reference to FIG. 7 is Embodiment 6 that is a two-shaft gas turbine system applied to another gas turbine system. FIG. 7 is a diagram illustrating the configuration of the gas turbine system in which nitrogen resulting from gasification of coal is injected into the upstream side with respect to the low-pressure turbine 3L.

Discussion of the identical components shared by the gas turbine systems of Embodiments 5 and 6 will not be duplicated.

In the two-shaft gas turbine system of FIG. 7, gasification air 202 compressed by a compressor (not illustrated) other than the compressor 1 is supplied to an air separator 221, where the gasification air 202 is separated into oxygen 222 and nitrogen 223. The oxygen 222 is then introduced into a gasification furnace 224, where the oxygen 222 is reacted with coal 225 to form gasified coal 226. The gasified coal 226 is used as the fuel 200 for the turbine system.

In the meantime, the nitrogen 223 separated from the gasification air 202 at the air separator 221 is injected into the combustor 2. This injection of the nitrogen 223 reduces the flame temperature inside the combustor 2 locally and contributes to the reduction of the amount of nitrogen oxide (NOx) generated at and exhausted from the combustor 2.

However, the injection of the nitrogen 223 into the combustor 2 also increases the flow rate of the working fluid that drives the high-pressure turbine 3H, resulting in an increase in the output from the high-pressure turbine 3H and over speeds of the high-pressure turbine 3H and the compressor 1. Therefore, the gas turbine system of Embodiment 6 is designed to supply part of the nitrogen 223 through the branched flow path 111 on which the flow rate adjuster 32 is placed to the high-temperature parts of the high-pressure turbine 3H as diverged nitrogen 227.

In other words, the nitrogen 223 of Embodiment 6 supplied to the combustor 2 and the high-temperature parts of the high-pressure turbine 3H corresponds to the steam 205 of Embodiment 5 that is generated by the boiler 160. Further, the nitrogen 223 is lower in temperature than the compressed air 204 and has a higher cooling efficiency. Thus, similar to Embodiment 5, the gas turbine system of Embodiment 6 is also capable of a stable system operation by balancing the drive force for the compressor 1 with the output from the high-pressure turbine 3H.

In Embodiment 6, the material temperature of the high-pressure turbine 3H located near the flow path of the diverged nitrogen 227 can also be reduced by the diverged nitrogen 227. Furthermore, low-grade materials low in upper temperature limit can be used as turbine materials, which leads to a decrease in the manufacturing costs of the two-shaft gas turbine system of Embodiment 6.

### Embodiment 7

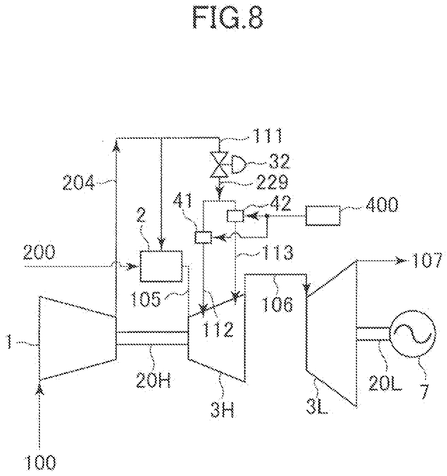

Described next with reference to FIG. 8 is Embodiment 7 that is a two-shaft gas turbine system applied to still another gas turbine system. FIG. 8 is a diagram illustrating the configuration of the gas turbine system in which low-calorific gas is used as the fuel 200 for the combustor 2 and part of the compressed air 204 is injected into the upstream side with respect to the low-pressure turbine 3L.

The identical components shared by the gas turbine system of Embodiment 7, intended for power generation, and the gas turbine system of Embodiment 1 will not be discussed further.

In the two-shaft gas turbine system illustrated in FIG. 8, low-calorific gas is used as the fuel 200. The calorific value of the low-calorific gas is a half to one tenth of those of commonly used natural gases. This means that a great amount of the fuel 200 is required to operate the gas turbine system at a given rated combustion temperature.

However, the supply of a large amount of the fuel 200 to the combustor 2 increases the flow rate of the working fluid that drives the high-pressure turbine 3H. This in turn increases the output from the high-pressure turbine 3H, resulting in over speeds of the high-pressure turbine 3H and the compressor 1 and the unbalance between the drive force for the compressor 1 and the output from the high-pressure turbine 3H. Therefore, the two-shaft gas turbine system of Embodiment 7 in which the low-calorific gas is used as the fuel 200 is designed to supply part of the compressed air 204 obtained at the compressor 1 to the high-pressure turbine 3H through the branched flow path 111 on which the flow rate adjuster 32 is placed without introduction thereof into the combustor 2.

In other words, the compressed air 204 of Embodiment 7 supplied from the upstream side with respect to the low-pressure turbine 3L to its downstream gas flow paths corresponds to the high-temperature humid air 104 of Embodiment 1 that is supplied from the recuperator 6 to the combustor 2 and the high-temperature parts of the high-pressure turbine 3H.

Thus, similar to the other embodiments described above, the gas turbine system of Embodiment 7, which is a two-shaft gas turbine system applied to a turbine system for low-calorific-gas, is also capable of a stable system operation by balancing the drive force for the compressor 1 with the output from the high-pressure turbine 3H.

Possible locations where low-calorific gases are generated are plants where coal is gasified with the use of air; various plants including steel plants and refineries; and oil and gas fields where low-calorific gasses are generated as by-products. The low-calorific gases generated at such locations may vary in calorific value depending on operating conditions and seasons. When a gas relatively high in calorific value is used in the gas turbine system of Embodiment 7, the flow rate adjuster 32 can be controlled to adjust the flow rate of diverged air 229. By doing so, the gas turbine system becomes capable of a stable system operation by balancing the drive force for the compressor 1 with the output from the high-pressure turbine 3H. It should be noted that a coolant feeder 400 can also be placed in the gas turbine system to feed coolant to the coolant mixers 41 and 42 so as to be mixed with the diverged air 229. With this, an optimal coolant can be generated.

While the above explanation of Embodiments 5 to 7 has centered on the effects of Embodiment 1, it is also effective to combine each of the gas turbine systems of Embodiments 5 to 7 with one or more of Embodiments 2 to 4 as desired. The gas turbine systems of Embodiments 5 to 7 are also capable of producing the effects of Embodiments 2 to 4.

### INDUSTRIAL APPLICABILITY

The invention can be employed for electric power generation as a highly efficient gas turbine system. The invention can be employed also as a cogeneration system capable of supplying heat and electric power or an engine for driving a pump, a compressor, a screw propeller, or the like.

## Claims

1. A method for operating a two-shaft gas turbine system, the system comprising:
a compressor (1) for compressing air;
a humidification tower (5) for increasing the flow rate of working fluid that includes the compressed air;
a combustor (2) for combusting the compressed air with fuel to generate combustion gas;
a high-pressure turbine (3H) connected to the compressor (1) with a shaft (20H) and driven by the combustion gas; and
a low-pressure turbine (3L) connected to a driven apparatus with a shaft (20L) and driven by exhaust discharged from the high-pressure turbine (3H); wherein the method comprises the step of diverging part of the working fluid that includes the compressed air without introduction thereof into the combustor (2) and using the diverged working fluid as a coolant when the rotational speed of the compressor (1) exceeds a rated rotational speed on the condition that a combustion temperature during rated operation is set to a rated combustion temperature of a simple-cycle gas turbine system without flow rate increasing means.

2. A two-shaft gas turbine system, comprising:
a compressor (1) for compressing air;
a humidification tower (5) for increasing the flow rate of working fluid that includes the compressed air;
a combustor (2) for combusting the working fluid increased in flow rate with fuel to generate combustion gas;
a high-pressure turbine (3H) connected to the compressor (1) with a shaft (20H) and driven by the combustion gas; and
a low-pressure turbine (3L) connected to a driven apparatus with a shaft (20L) and driven by exhaust discharged from the high-pressure turbine (3H); wherein in the two-shaft gas system one shaft is used exclusively for each of the high-pressure turbine for driving a compressor and the low-pressure turbine for outputting shaft power; wherein the system further comprises a first branched flow path (111);
a flow rate adjuster (32) placed on the branched flow path (111);
a control device controlling the flow rate adjuster (32); a recuperator (6) for performing heat exchange between the working fluid increased in flow rate by the humidification tower (5) and exhaust discharged from the low-pressure turbine (3L), and
wherein the two-shaft gas turbine system is configured such that the first branched flow path (111) guides part of the working fluid increased in flow rate by the humidification tower (5) which exits the recuperator to the turbine parts that require cooling without introduction thereof into the combustor (2) when the rotational speed of the compressor (1) exceeds a rated rotational speed on the condition that a combustion temperature during rated operation is set to a rated combustion temperature of a simple-cycle gas turbine system without flow rate increasing means.

3. The two-shaft gas turbine system of claim 2, further comprising:
a second branched flow path (110) for diverging part of the working fluid increased in flow rate by the humidification tower (5) without introduction thereof into the recuperator (6); and
a coolant mixer for mixing the working fluid that has flowed through the first branched flow path (111) with the working fluid that has flowed through the second branched flow path (110) before introduction thereof into the turbine parts that require cooling.

4. The two-shaft gas turbine system of at least one of claims 2 to 3, wherein the turbine parts that require cooling are blades of the high-pressure turbine (3H).

5. The two-shaft gas turbine system of at least one of claims 2 to 4, wherein a driven apparatus is connected to the compressor-side end of the shaft (20H) that connects the compressor (1) and the high-pressure turbine (3H).

6. The two-shaft gas turbine system of at least one of claim 4 to 5, wherein the control device for controlling the flow rate adjuster (32) is based on the flow rate of the fuel fed to the combustor (2).

7. The two-shaft gas turbine system of at least one of claims 3 to 6, wherein the coolant mixer comprises:
a first coolant mixer for mixing the working fluid that has flowed through the first branched flow path (111) with the working fluid that has flowed through the second branched flow path (110) to supply the resultant mix to high-temperature rotary members of the high-pressure turbine; and
a second coolant mixer for mixing the working fluid that has flowed through the first branched flow path (111) with the working fluid that has flowed through the second branched flow path (110) to supply the resultant mix to high-temperature stationary members of the high-pressure turbine.

## Patentansprüche

1. Verfahren zum Betreiben eines Zweiwellengasturbinensystems, wobei das System Folgendes umfasst:
einen Verdichter (1) zum Verdichten von Luft;
einen Befeuchtungsturm (5) zum Erhöhen der Durchflussmenge eines Arbeitsfluids, dass in der verdichteten Luft enthalten ist;
eine Verbrennungsvorrichtung (2) zum Verbrennen der verdichteten Luft mit Brennstoff, um Verbrennungsgas zu erzeugen;
eine Hochdruckturbine (3H), die mit dem Verdichter (1) über eine Welle (20H) verbunden ist und durch das Verbrennungsgas angetrieben wird; und
eine Niederdruckturbine (3L), die mit einer angetriebenen Vorrichtung über eine Welle (20L) verbunden ist und durch Abgas, das von der Hochdruckturbine (3H) ausgestoßen wird, angetrieben wird;
wobei das Verfahren den Schritt des Abzweigens eines Teils des Arbeitsfluids, das die verdichtete Luft enthält, ohne dessen Einleiten in die Verbrennungsvorrichtung (2), und des Verwendens des abgezweigten Arbeitsfluids als ein Kühlmittel umfasst, dann, wenn die Drehzahl des Verdichters (1) eine Nenndrehzahl überschreitet, unter der Bedingung, dass eine Verbrennungstemperatur im Nennbetrieb auf eine Nennverbrennungstemperatur eines Einfachzyklusgasturbinensystems ohne Durchflussmengenerhöhungsmittel eingestellt ist.

2. Zweiwellengasturbinensystem, das Folgendes umfasst:
einen Verdichter (1) zum Verdichten von Luft;
einen Befeuchtungsturm (5) zum Erhöhen der Durchflussmenge eines Arbeitsfluids, dass in der verdichteten Luft enthalten ist;
eine Verbrennungsvorrichtung (2) zum Verbrennen des in der Durchflussmenge erhöhten Arbeitsfluids mit Brennstoff, um Verbrennungsgas zu erzeugen;
eine Hochdruckturbine (3H), die mit dem Verdichter (1) über eine Welle (20H) verbunden ist und durch das Verbrennungsgas angetrieben wird; und
eine Niederdruckturbine (3L), die mit einer angetriebenen Vorrichtung über eine Welle (20L) verbunden Ist und durch Abgas, das von der Hochdruckturbine (3H) ausgestoßen wird, angetrieben wird;
wobei in dem Zweiwellengassystem eine Welle ausschließlich für die Hochdruckturbine zum Antreiben eines Verdichters und für die Niederdruckturbine zum Ausgeben von Wellenleistung verwendet wird;
wobei das System ferner Folgendes umfasst:
einen ersten abgezweigten Strömungsweg (111);
eine Durchflussmengeneinstelleinrichtung (32), die in dem abgezweigten Strömungsweg (111) platziert ist;
eine Steuervorrichtung, die die Durchflussmengeneinstelleinrichtung (32) steuert; und
einen Wärmetauscher (6) zum Durchführen eines Wärmeaustausches zwischen dem in der Durchflussmenge durch den Befeuchtungsturm (5) erhöhten Arbeitsfluid und Abgas, das von der Niederdruckturbine (3L) ausgestoßen wird,
wobei das Zweiwellengasturbinensystem so konfiguriert ist, dass der erste abgezweigte Strömungsweg (111) einen Teil des in der Durchflussmenge durch den Befeuchtungsturm (5) erhöhten Arbeitsfluids, der den Wärmetauscher zu den Turbinenteilen, die eine Kühlung benötigen, verlässt, ohne seine Einleitung in die Verbrennungsvorrichtung (2) leitet, dann, wenn die Drehzahl des Verdichters (1) eine Nenndrehzahl überschreitet, unter der Bedingung, dass eine Verbrennungstemperatur im Nennbetrieb auf eine Nennverbrennungstemperatur eines Einfachzyklusgasturbinensystems ohne Durchflussmengenerhöhungsmittel eingestellt ist.

3. Zweiwellengasturbinensystem nach Anspruch 2, das ferner Folgendes umfasst:
einen zweiten abgezweigten Strömungspfad (110) zum Abzweigen eines Teils des in der Durchflussmenge durch den Befeuchtungsturm (5) erhöhten Arbeitsfluids, ohne dessen Einleiten in den Wärmetauscher (6); und
einen Kühlmittelmischer zum Mischen des Arbeitsfluids, das durch den ersten abgezweigten Strömungsweg (111) geströmt ist, mit dem Arbeitsfluid, das durch den zweiten abgezweigten Strömungsweg (110) geströmt ist, vor dessen Einleitung in die Turbinenteile, die Kühlung benötigen.

4. Zweiwellengasturbinensystem nach mindestens einem der Ansprüche 2 bis 3, wobei die Turbinenteile, die Kühlung benötigen, Flügel der Hochdruckturbine (3H) sind.

5. Zweiwellengasturbinensystem nach mindestens einem der Ansprüche 2 bis 4, wobei eine angetriebene Vorrichtung mit dem verdichterseitigen Ende der Welle (20H), die den Verdichter (1) und die Hochdruckturbine (3H) verbindet, verbunden ist.

6. Zweiwellengasturbinensystem nach mindestens einem der Ansprüche 4 bis 5, wobei die Steuervorrichtung zum Steuern der Durchflussmengeneinstelleinrichtung (32) auf der Durchflussmenge des Brennstoffs, der in die Verbrennungsvorrichtung (2) eingespeist wird, basiert.

7. Zweiwellengasturbinensystem nach mindestens einem der Ansprüche 3 bis 6, wobei der Kühlmittelmischer Folgendes umfasst:
einen ersten Kühlmittelmischer zum Mischen des Arbeitsfluids, das durch den ersten abgezweigten Strömungsweg (111) geströmt ist, mit dem Arbeitsfluid, das durch den zweiten abgezweigten Strömungsweg (110) geströmt ist, um das resultierende Gemisch drehenden Hochtemperaturelementen der Hochdruckturbine zuzuführen; und
einen zweiten Kühlmittelmischer zum Mischen des Arbeitsfluids, das durch den ersten abgezweigten Strömungsweg (111) geströmt ist, mit dem Arbeitsfluid, das durch den zweiten abgezweigten Strömungsweg (110) geströmt ist, um das resultierende Gemisch stationären Hochtemperaturelementen der Hochdruckturbine zuzuführen.

## Revendications

1. Procédé pour le fonctionnement d'un système de turbine à gaz à deux arbres, le système comprenant :
un compresseur (1) pour comprimer de l'air ;
une tour d'humidification (5) pour augmenter le débit du fluide de travail qui inclut l'air comprimé ;
un brûleur (2) pour faire brûler l'air comprimé avec du combustible afin de générer des gaz de combustion ;
une turbine à haute pression (3H) connectée au compresseur (1) avec un arbre (20H) et entraînée par les gaz de combustion ; et
une turbine à basse pression (3L) connectée à un appareil mené avec un arbre (20L) et entraînée par l'échappement déchargé hors de la turbine à haute pression (3H) ;
dans lequel le procédé comprend :
l'étape consistant à dériver une partie du fluide de travail qui inclut l'air comprimé sans l'introduire dans le brûleur (2) et à utiliser le fluide de travail dérivé à titre d'agent de refroidissement quand la vitesse de rotation du compresseur (1) excède une vitesse de rotation nominale à condition qu'une température de combustion pendant le fonctionnement nominal soit fixée à une température de combustion nominale d'un système à turbine à gaz à simple cycle dépourvu de moyens augmentant le débit.

2. Système de turbine à gaz à deux arbres, comprenant :
un compresseur (1) pour comprimer de l'air ;
une tour d'humidification (5) pour augmenter le débit du fluide de travail qui inclut l'air comprimé ;
un brûleur (2) pour faire brûler le fluide de travail dont le débit est augmenté avec du combustible pour générer des gaz de combustion ;
une turbine à haute pression (3H) connectée au compresseur (1) avec un arbre (20H) et entraînée par les gaz de combustion ; et
une turbine à basse pression (3L) connectée à un appareil mené avec un arbre (20L) et entraînée par l'échappement déchargé hors de la turbine à haute pression (3H) ;
dans lequel dans le système de turbine à gaz à deux arbres, un arbre est utilisé exclusivement à la fois pour la turbine à haute pression afin d'entraîner un compresseur et pour la turbine à basse pression afin de fournir une puissance à l'arbre ;
dans lequel le système comprend en outre un premier trajet d'écoulement ramifié (111) ;
un dispositif d'ajustement de débit (32) placé sur le trajet d'écoulement ramifié (111) ;
un dispositif de commande qui commande le dispositif d'ajustement de débit (32) ;
un récupérateur (6) pour effectuer un échange de chaleur entre le fluide de travail dont le débit est augmenté par la tour d'humidification (5) et l'échappement déchargé hors de la turbine à basse pression (3L), et
dans lequel le système de turbine à gaz à deux arbres est configuré de telle façon que le premier trajet d'écoulement ramifié (111) guide une partie du fluide de travail dont le débit est augmenté par la tour d'humidification (5) qui sort du récupérateur vers les parties de la turbine qui nécessite un refroidissement sans être introduit dans le brûleur (2) quand la vitesse de rotation du compresseur (1) excède une vitesse de rotation nominale à condition que la température de combustion pendant le fonctionnement nominal soit fixée à une température de combustion nominale d'un système de turbine à gaz à simple cycle dépourvu de moyens pour augmenter le débit.

3. Système de turbine à gaz à deux arbres selon la revendication 2, comprenant en outre :
un second trajet d'écoulement ramifié (110) pour dériver une partie du fluide de travail dont le débit est augmenté par la tour d'humidification (5) sans introduire celui-ci dans le récupérateur (6) ; et
un mélangeur d'agent de refroidissement pour mélanger le fluide de travail qui s'est écoulé à travers le premier trajet d'écoulement ramifié (111) avec le fluide de travail qui s'est écoulé à travers le second trajet d'écoulement ramifié (110) avant leur introduction dans les parties de la turbine qui nécessitent un refroidissement.

4. Système de turbine à gaz à deux arbres selon l'une au moins des revendications 2 et 3, dans lequel les parties de la turbine qui nécessitent un refroidissement sont les pales de la turbine à haute pression (3H).

5. Système de turbine à gaz à deux arbres selon l'une au moins des revendications 2 à 4, dans lequel un appareil mené est connecté à l'extrémité de l'arbre côté compresseur (20H) qui connecte le compresseur (1) et la turbine à haute pression (3H).

6. Système de turbine à gaz à deux arbres selon l'une au moins des revendications 4 et 5, dans lequel le dispositif de commande destiné à commander le dispositif d'ajustement de débit (32) est basé sur le débit du combustible alimenté au brûleur (2).

7. Système de turbine à gaz à deux arbres selon l'une au moins des revendications 3 à 6, dans lequel le mélangeur pour agent de refroidissement comprend :
un premier mélangeur pour agent de refroidissement destiné à mélanger le fluide de travail qui s'est écoulé à travers le premier trajet d'écoulement ramifié (111) avec le fluide de travail qui s'est écoulé à travers le second trajet d'écoulement ramifié (110) afin d'alimenter le mélange résultant aux éléments rotatifs à haute température de la turbine à haute pression ; et
un second mélangeur pour agent de refroidissement destiné à mélanger le fluide de travail qui s'est écoulé à travers le premier trajet d'écoulement ramifié (111) avec le fluide de travail qui s'est écoulé à travers le second trajet d'écoulement ramifié (110) afin d'alimenter le mélange résultant aux éléments stationnaires à haute température de la turbine à haute pression.
